# EUROPEAN PATENT APPLICATION

(11) **EP 3 968 285 A2**
(43) Date of publication of application: **16.03.2022**
(21) Application number: 22151885.5
(22) Date of filing: 17.01.2022
(51) Int. Cl.: G06V 10/46, G06V 40/10

(54) **MODEL TRAINING METHOD AND APPARATUS, KEYPOINT POSITIONING METHOD AND APPARATUS, DEVICE AND MEDIUM**

(30) Priority: 21.01.2021 CN 202110084179
(71) Applicant: Beijing Baidu Netcom Science and Technology Co., Ltd., Beijing 100085 (CN)
(72) Inventor: WANG, Jian, BEIJING, 100085 (CN); LU, Zipeng, BEIJING, 100085 (CN); SUN, HAO, BEIJING, 100085 (CN); JIN, Zhiyong, BEIJING, 100085 (CN); DING, Errui, BEIJING, 100085 (CN)
(74) Representative: Regimbeau

(57) **Abstract**

Provided are a training method and apparatus for a human keypoint positioning model, a human keypoint positioning method and apparatus, a device, a medium and a program product. The training method includes determining an initial positioned point of each of keypoints; acquiring N candidate points of each keypoint according to a position of the initial positioned point; extracting a first feature image, and forming N sets of graph structure feature data according to the first feature image and the N candidate points; performing graph convolution on the N sets of graph structure feature data to obtain N sets of offsets; correcting initial positioned points of all the keypoints to obtain N sets of current positioning results; and calculating each set of loss values according to labeled true values of all the keypoints and each set of current positioning results, and performing supervised training on the positioning model.

## Description

### TECHNICAL FIELD

The present application relates to the field of artificial intelligence and, in particular, to deep learning and computer vision technology, specifically a training method and apparatus for a human keypoint positioning model, a human keypoint positioning method and apparatus, a device, a medium and a program product.

### BACKGROUND

At present, human keypoint positioning is usually performed in the following manner: a deep neural network is used as a feature extractor, a thermodynamic diagram of each keypoint is generated based on a feature image, and then each keypoint is roughly positioned according to the maximum response position in the thermodynamic diagram.

In the related art, however, it is difficult to perform positioning or positioning errors occur when obscuration, blurred features or other more similar interference areas exist at human keypoints in an image.

### SUMMARY

The present application provides a training method and apparatus for a human keypoint positioning model, a human keypoint positioning method and apparatus, a device, a medium and a program product to improve the accuracy and robustness of human keypoint positioning.

In a first aspect, the present application provides a training method for a human keypoint positioning model. The method includes determining an initial positioned point of each of keypoints in a sample image by using a first subnetwork in a prebuilt positioning model; acquiring N candidate points of each of the keypoints according to a position of the initial positioned point in the sample image, where N is a natural number; extracting a first feature image of the sample image by using a second subnetwork in the positioning model, and forming N sets of graph structure feature data according to the second feature image and the N candidate points of each of the keypoints, where each set of the N sets of graph structure feature data includes feature vectors each of which is a feature vector of one of the N candidate points of each of the keypoints in the first feature image; performing graph convolution on the N sets of graph structure feature data respectively by using the second subnetwork to obtain N sets of offsets, where each set of offsets corresponds to all the keypoints; correcting initial positioned points of all the keypoints by using the N sets of offsets to obtain N sets of current positioning results of all the keypoints; and calculating each set of loss values according to labeled true values of all the keypoints and each set of the N sets of current positioning results separately, and performing supervised training on the positioning model according to each set of loss values.

In a second aspect, the present application further provides a human keypoint positioning method. The method includes determining an initial positioned point of each of human keypoints in an input image by using a first subnetwork in a pretrained positioning model; determining, according to a semantic relationship between features of adjacent keypoints of the initial positioned point, offsets of all the keypoints by using a second subnetwork in the positioning model; and correcting the initial positioned point of each of the keypoints by using each of the offsets corresponding to a respective keypoint, and using a correction result as a target positioned point of each of the human keypoints in the input image.

In a third aspect, the present application further provides a training apparatus for a human keypoint positioning model. The apparatus includes a first initial positioned point determination module, a candidate point acquisition module, a graph structure feature data acquisition module, a graph convolution module, a positioned point correction module and a supervised training module. The first initial positioned point determination module is configured to determine an initial positioned point of each of keypoints in a sample image by using a first subnetwork in a prebuilt positioning model. The candidate point acquisition module is configured to acquire N candidate points of each of the keypoints according to a position of the initial positioned point in the sample image, where N is a natural number. The graph structure feature data acquisition module is configured to extract a first feature image of the sample image by using a second subnetwork in the positioning model and form N sets of graph structure feature data according to the first feature image and the N candidate points of each of the keypoints, where each set of the N sets of graph structure feature data includes feature vectors each of which is a feature vector of one of the N candidate points of each of the keypoints in the first feature image. The graph convolution module is configured to perform graph convolution on the N sets of graph structure feature data respectively by using the second subnetwork to obtain N sets of offsets, where each set of offsets corresponds to all the keypoints. The positioned point correction module is configured to correct initial positioned points of all the keypoints by using the N sets of offsets to obtain N sets of current positioning results of all the keypoints. The supervised training module is configured to calculate each set of loss values according to labeled true values of all the keypoints and each set of the N sets of current positioning results separately, and perform supervised training on the positioning model according to each set of loss values.

In a fourth aspect, the present application further provides a human keypoint positioning apparatus. The apparatus includes a second initial positioned point determination module, an offset determination module and a target positioned point determination module. The second initial positioned point determination module is configured to determine an initial positioned point of each of human keypoints in an input image by using a first subnetwork in a pretrained positioning model. The offset determination module is configured to determine, according to a semantic relationship between features of adjacent keypoints of the initial positioned point, offsets of all the keypoints by using a second subnetwork in the positioning model. The target positioned point determination module is configured to correct the initial positioned point of each of the keypoints by using each of the offsets corresponding to a respective keypoint, and use a correction result as a target positioned point of each of the human keypoints in the input image.

In a fifth aspect, the present application further provides an electronic device. The electronic device includes at least one processor; and a memory communicatively connected to the at least one processor.

The memory stores instructions executable by the at least one processor to enable the at least one processor to perform the training method for a human keypoint positioning model according to any embodiment of the present application.

In a sixth aspect, the present application further provides a non-transitory computer-readable storage medium storing computer instructions for causing a computer to perform the training method for a human keypoint positioning model according to any embodiment of the present application.

In a seventh aspect, the present application further provides a computer program product. The computer program product includes a computer program which, when executed by a processor, causes the processor to perform the training method for a human keypoint positioning model according to any embodiment of the present application.

In an eighth aspect, the present application further provides an electronic device. The electronic device includes at least one processor; and a memory communicatively connected to the at least one processor.

The memory stores instructions executable by the at least one processor to enable the at least one processor to perform the human keypoint positioning method according to any embodiment of the present application.

In a ninth aspect, the present application further provides a non-transitory computer-readable storage medium. The storage medium stores computer instructions for causing a computer to perform the human keypoint positioning method according to any embodiment of the present application.

In a tenth aspect, the present application further provides a computer program product. The computer program product includes a computer program which, when executed by a processor, causes the processor to perform the human keypoint positioning method according to any embodiment of the present application.

It is to be understood that the content described in this part is neither intended to identify key or important features the present application nor intended to limit the scope of the present application. Other features of the present application are apparent from the description provided hereinafter. Other effects of the preceding optional implementations are described hereinafter in conjunction with embodiments.

### BRIEF DESCRIPTION OF DRAWINGS

The drawings are intended to provide a better understanding of the present solution and not to limit the present application.
FIG. 1 is a flowchart of a training method for a human keypoint positioning model according to an embodiment of the present application.
FIG. 2A is a flowchart of a training method for a human keypoint positioning model according to an embodiment of the present application.
FIG. 2B is a flowchart of a training method for a human keypoint positioning model according to an embodiment of the present application.
FIG. 3 is a flowchart of a human keypoint positioning method according to an embodiment of the present application.
FIG. 4 is a flowchart of a human keypoint positioning method according to an embodiment of the present application.
FIG. 5 is a diagram illustrating the structure of a training apparatus for a human keypoint positioning model according to an embodiment of the present application.
FIG. 6 is a diagram illustrating the structure of a human keypoint positioning apparatus according to an embodiment of the present application.
FIG. 7 is a block diagram of an electronic device for performing a training method for a human keypoint positioning model according to an embodiment of the present application.

### DETAILED DESCRIPTION

Example embodiments of the present application, including details of embodiments of the present application, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present application. Similarly, description of well-known functions and structures is omitted hereinafter for clarity and conciseness.

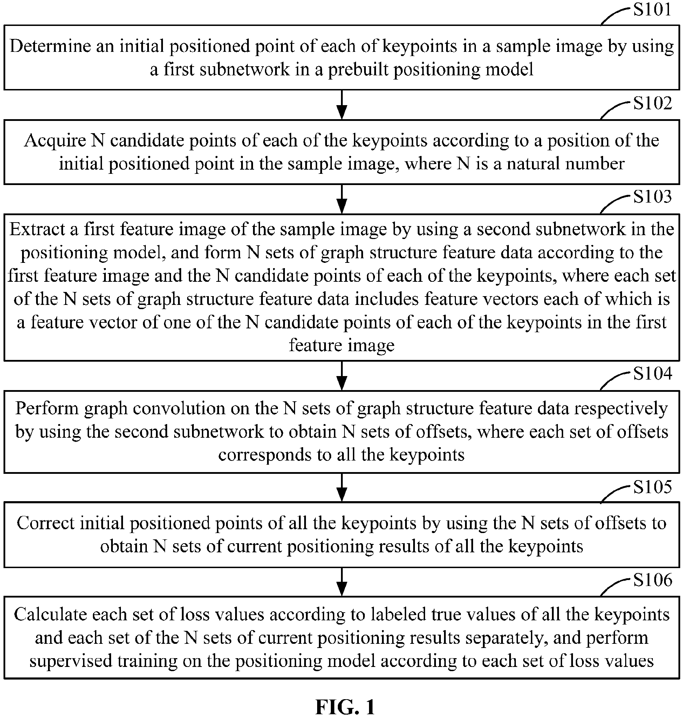

FIG. 1 is a flowchart of a training method for a human keypoint positioning model according to an embodiment of the present application. This embodiment relates to the field of artificial intelligence and, in particular, to deep learning and computer vision. This embodiment is applicable to the case of human keypoint positioning. The method can be performed by a training apparatus for a human keypoint positioning model. The apparatus is implemented as software and/or hardware and may be preferably configured in an electronic device such as a computer device or a server. As shown in FIG. 1, the method includes the steps below.

In step S101, an initial positioned point of each of keypoints in a sample image is determined by using a first subnetwork in a prebuilt positioning model.

In step S102, N candidate points of each of the keypoints are acquired according to a position of the initial positioned point in the sample image, where N is a natural number.

In step S103, a first feature image of the sample image is extracted by using a second subnetwork in the positioning model, and N sets of graph structure feature data are formed according to the first feature image and the N candidate points of each of the keypoints, where each set of the N sets of graph structure feature data includes feature vectors each of which is a feature vector of one of the N candidate points of each of the keypoints in the first feature image.

In this embodiment of the present application, human keypoints can be positioned accurately by using the positioning model obtained by being trained. The positioning model includes a first subnetwork and a second subnetwork. The two subnetworks may have the same or different structures. The first subnetwork is used for determining the initial positioned point and the candidate points. The second subnetwork is used for fine positioning based on graph learning, modeling a semantic relationship between different keypoint features to determine the offsets of the initial positioned point, and correcting the position of the initial positioned point through the offsets. In this manner, the model is trained to be more robust. Therefore, the first subnetwork and the second subnetwork have different training goals.

In steps S101 and S 102, the determination of the initial positioned point of each of the keypoints by using the first subnetwork may be performed based on any keypoint positioning method in the related art. This is not limited in the present application. After the initial positioned point is determined, N candidate points of each of the keypoints are acquired according to the position of the initial positioned point in the sample image, where N is a natural number. For example, N points around the initial positioned point of each of the keypoints may be selected as candidate points of the keypoint.

The two subnetworks have different training goals and thus have different parameters despite their identical initial structures. In step S103, a first feature image of the sample image is extracted by using a second subnetwork, and N sets of graph structure feature data are formed according to the first feature image and the N candidate points of each of the keypoints, where each set of the N sets of graph structure feature data includes feature vectors each of which is a feature vector of one of the N candidate points of each of the keypoints in the first feature image.

In step S104, graph convolution is performed on the N sets of graph structure feature data respectively by using the second subnetwork to obtain N sets of offsets, where each set of offsets corresponds to all the keypoints.

In step S105, initial positioned points of all the keypoints are corrected by using the N sets of offsets to obtain N sets of current positioning results of all the keypoints.

In step S106, each set of loss values is calculated according to labeled true value of all the keypoints and each set of the N sets of current positioning results separately, and supervised training is performed on the positioning model according to each set of loss values.

Specifically, each set of graph structure feature data is composed of feature vectors each of which is a feature vector of one of the N candidate points of each of the keypoints, and the graph convolution is performed on the N sets of graph structure feature data so that corresponding offsets are obtained. A total of N sets of offsets of all the keypoints are obtained. The initial positioned point of each of the keypoints is corrected through each set of the N sets of offsets corresponding to a respective keypoint so that N sets of current positioning results of all the keypoints are obtained. During training, each of loss values is calculated according to labeled true values of all the keypoints and each set of the N sets of current positioning results separately, and supervised training is performed on the positioning model according to each set of loss values.

In this manner, the trained model may determine the initial positioned point of each keypoint by using the first subnetwork, determine the offsets by using the second subnetwork and correct the initial positioned point through the offsets, thereby improving the accuracy of keypoint positioning.

Moreover, in the preceding training process, graph convolution is performed on each set of graph structure feature data by using the second subnetwork so that features of different keypoints can be modeled. Information is transferred between features of different keypoints so that when the trained positioning model positions each keypoint, the trained positioning model may perform inference by use of points around each keypoint or farther points. In this manner, a keypoint in the image can be positioned even if this keypoint is obscured or blurred. More robust keypoint positioning is achieved in the case of insufficient image information.

In the scheme of this embodiment of the present application, supervised training is performed on the prebuilt positioning model. The positioning model includes a first subnetwork and a second subnetwork. The first subnetwork is used for determining the initial positioned point and the candidate points. The second subnetwork is used for fine positioning based on graph learning. In the training process, graph convolution is performed on each set of graph structure feature data separately by using the second subnetwork, offsets are inferred through information transfer between features of different keypoints, and the position of the initial positioned point is corrected through the offsets. In this manner, the model can position each keypoint more accurately, and the model is trained to be more robust by modeling a semantic relationship between different keypoint features.

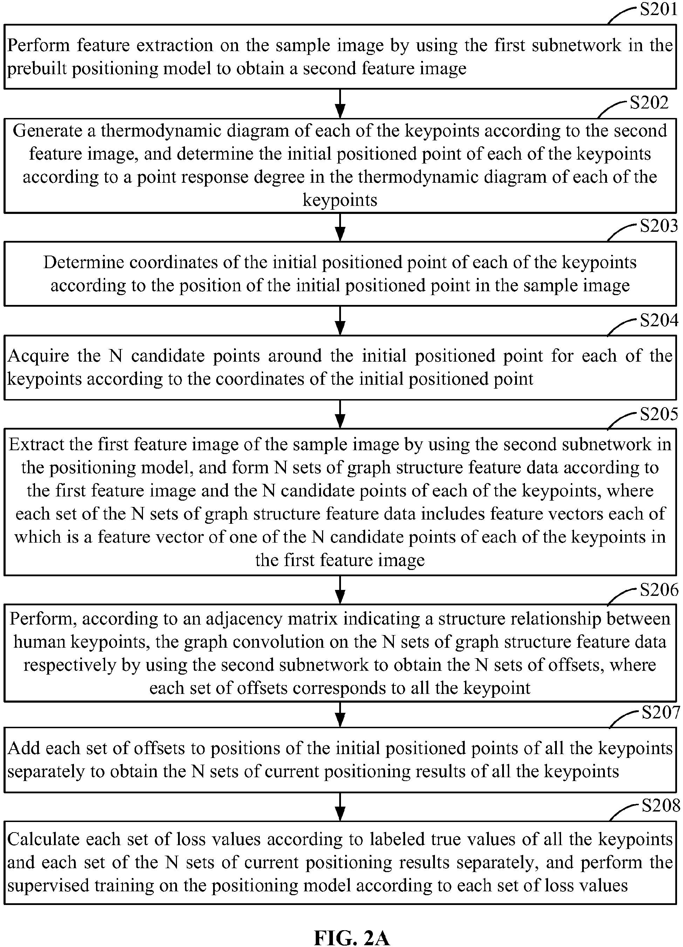

FIG. 2A is a flowchart of a training method for a human keypoint positioning model according to an embodiment of the present application. This embodiment is an improvement on the preceding embodiment. As shown in FIG. 2A, the method includes the steps below.

In step S201, feature extraction is performed on the sample image by using the first subnetwork in the prebuilt positioning model to obtain a second feature image.

In step S202, a thermodynamic diagram of each of the keypoints is generated according to the second feature image, and the initial positioned point of each of the keypoints is determined according to a point response degree in the thermodynamic diagram of each of the keypoints.

The thermodynamic diagram of a keypoint is generated according to the probability that each point in the image belongs to the keypoint. The higher the probability of a point, the greater the response degree of the point in the thermodynamic diagram. Therefore, the point having the largest response degree in the thermodynamic diagram of the keypoint can be used as the initial positioned point of the keypoint.

In step S203, coordinates of the initial positioned point of each of the keypoints are determined according to the position of the initial positioned point in the sample image.

In step S204, the N candidate points around the initial positioned point are acquired for each of the keypoints according to the coordinates of the initial positioned point.

For example, N points around the coordinate position of the initial positioned point of each of the keypoints may be randomly selected as candidate points.

In step S205, the first feature image of the sample image is extracted by using the second subnetwork in the positioning model, and the N sets of graph structure feature data are formed according to the first feature image and the N candidate points of each of the keypoints, where each set of the N sets of graph structure feature data includes feature vectors each of which is a feature vector of one of the N candidate points of each of the keypoints in the first feature image.

In step S206, the graph convolution is performed, according to an adjacency matrix indicating a structure relationship between human keypoints, on the N sets of graph structure feature data respectively by using the second subnetwork to obtain the N sets of offsets, where each set of offsets corresponds to all the keypoints.

The adj acency matrix used in the graph convolution is prebuilt according to the structure relationship between human keypoints. For example, the wrist is connected to the elbow through the forearm and then connected to the shoulder through the upper arm. This position relationship or the position relationship between finger joints belongs to the structure relationship between human keypoints. Therefore, graph convolution of the graph structure feature data is a process of modeling features of different keypoints. The second subnetwork learns the semantic relationship between features of different keypoints so that the trained second subnetwork can perform inference according to information transfer between features of different keypoints and by use of points around each keypoint or farther points. In this manner, a keypoint in the image can be positioned even if this keypoint is obscured or blurred. More robust keypoint positioning is achieved in the case of insufficient image information.

In step S207, each set of offsets is added to positions of the initial positioned points of all the keypoints to obtain the N sets of current positioning results of all the keypoint.

One manner of correcting the initial positioned points through the offsets may be adding the offsets and the positions of the initial positioned points. Of course, the correction manner is not limited in this embodiment of the present application.

In step S208, each set of loss values is calculated according to the labeled true values of all the keypoints and each set of the N sets of current positioning results separately, and the supervised training is performed on the positioning model according to each set of loss values.

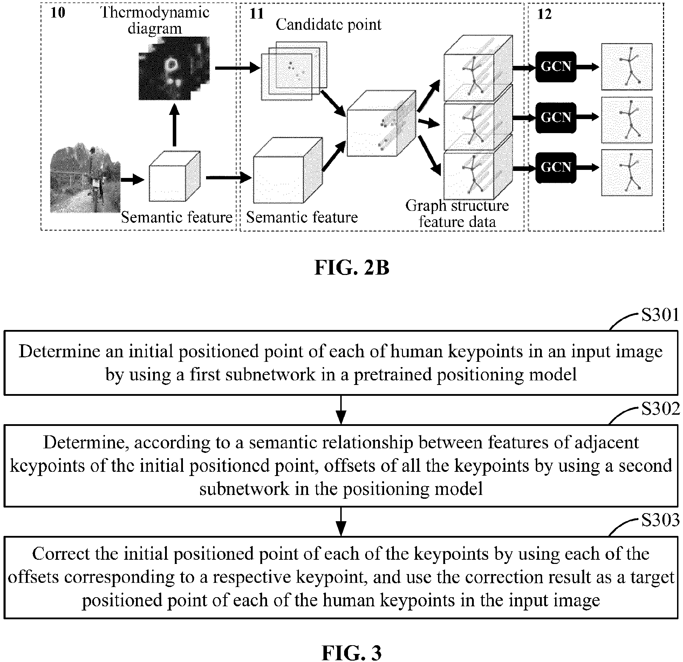

One implementation is as shown in FIG. 2B. In step 10 of FIG. 2B, a sample image for training is input into a positioning model, and a first subnetwork in the positioning model obtains a second feature image by extracting semantic features of the image, generates a thermodynamic diagram of each of the keypoints according to the second feature image, and then uses a point with the maximum response in the thermodynamic diagram as the initial positioned point of each of the keypoints. In step 11 of FIG. 2B, N candidate points are acquired for each of the keypoints according to the position of the initial positioned point, features are extracted by using the second subnetwork in the positioning model to obtain the first feature image, and a feature vector of each candidate point in the first feature image is acquired to form graph structure feature data. It is to be noted that FIG. 2B shows only three candidate points and three sets of graph structure feature data by way of example, and the number of candidate points and the amount of graph structure feature data are not limited in this embodiment of the present application. However, if the number of candidate points and the amount of graph structure feature data are too small, the model may be trained insufficiently. Therefore, an appropriate number of candidate points around the initial positioned point need to be selected to form the graph structure feature data. In step 12 of FIG. 2B, a graph convolution network (GCN) is used for the graph convolution performed on each set of graph structure feature data separately by using the second subnetwork so that offsets of the initial positioned point of each keypoint are obtained. Then the position of the initial positioned point is corrected through the offsets, each set of loss values is calculated according to labeled true values of all the keypoints and each set of the N sets of current positioning results separately, and the supervised training is performed on the positioning model according to each set of loss values.

In the scheme of this embodiment of the present application, the supervised training is performed on the prebuilt positioning model. The positioning model includes a first subnetwork and a second subnetwork. The first subnetwork is used for determining the initial positioned point and the candidate points. The second subnetwork is used for fine positioning based on graph learning. In the training process, graph convolution is performed on each set of graph structure feature data separately by using the second subnetwork, offsets are inferred through information transfer between features of different keypoints, and the position of the initial positioned point is corrected through the offsets. In this manner, the model can position each keypoint more accurately, and the model is trained to be more robust by modeling a semantic relationship between different keypoint features.

FIG. 3 is a flowchart of a human keypoint positioning method according to an embodiment of the present application. This embodiment relates to the field of artificial intelligence and, in particular, to deep learning and computer vision technology. This embodiment is applicable to the case of human keypoint positioning. The method can be performed by a human keypoint positioning apparatus. The apparatus is implemented as software and/or hardware and may be preferably configured in an electronic device such as a computer device, a terminal or a server. As shown in FIG. 1, the method includes the steps below.

In step S301, an initial positioned point of each of human keypoints in an input image is determined by using a first subnetwork in a pretrained positioning model.

In step S302, offsets of all the keypoints are determined according to a semantic relationship between features of adjacent keypoints of the initial positioned point and by using a second subnetwork in the positioning model.

The positioning model includes a first subnetwork and a second subnetwork. The determination of the initial positioned point of each of the keypoints by using the first subnetwork may be performed based on any keypoint positioning method in the related art. This is not limited in the present application. The second subnetwork is used for fine positioning based on graph learning. Specifically, in the model training process, a semantic relationship between different keypoint features is modeled so that the second subnetwork in the trained model may determine the offset of the initial positioned point according to the semantic relationship between features of adjacent keypoints of the initial positioned point; and the position of the initial positioned point is corrected through the offset so that the model is trained to be more robust. In this manner, a keypoint in the image can be positioned even if this keypoint is obscured or blurred.

In one implementation of this embodiment of the present application, the positioning model may be obtained by being trained according to the training method for a human keypoint positioning model according to any embodiment of the present application.

In step S303, the initial positioned point of each of the keypoints is corrected through each of the offsets corresponding to a respective keypoint, and the correction result is used as a target positioned point of each of the human keypoints in the input image.

Since the second subnetwork has determined the offset of the initial positioned point according to the semantic relationship between features of adjacent keypoints of the initial positioned point, any initial positioned point that is determined by using the first subnetwork and that is positioned inaccurately because the keypoint is obscured or blurred can be corrected through the offset.

In the scheme of this embodiment of the present application, the initial positioned point and the offset of each keypoint are determined by the two subnetworks in the positioning model. Since the offsets are determined according to the semantic relationship between features of adjacent keypoints of the initial positioned point, the problem of inaccurate recognition caused by that keypoints are obscured or blurred can be solved by correcting the initial positioned points through the offsets. When the positioning model is used for an intelligent device such as a surveillance camera, the device can obtain a more robust capability of human keypoint positioning.

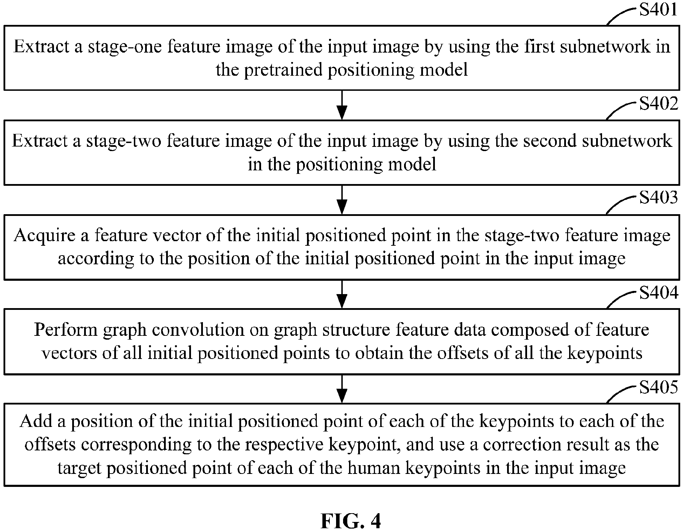

FIG. 4 is a flowchart of a human keypoint positioning method according to an embodiment of the present application. This embodiment is an improvement on the preceding embodiment. As shown in FIG. 4, the method includes the steps below.

In step S401, a stage-one feature image of the input image is extracted by using the first subnetwork in the pretrained positioning model.

In step S402, a stage-two feature image of the input image is extracted by using the second subnetwork in the positioning model.

The positioning model is obtained by being trained according to the training method for a human keypoint positioning model according to any embodiment of the present application.

In step S403, a feature vector of the initial positioned point in the stage-two feature image is acquired according to the position of the initial positioned point in the input image.

In this embodiment of the present application, the first subnetwork and the second subnetwork in the positioning model may have the same or different structures. However, the two subnetworks have different training goals. The training goal of the first subnetwork is to initially position each keypoint. This goal can be achieved by using any algorithm in the related art. The training goal of the second subnetwork is to perform semantic feature extraction of points around the initial positioned point and determine the offset of the initial positioned point according to information transfer between features of different keypoints. Accordingly, even if the initial network structures of the two subnetworks are the same, the network parameters of the two subnetworks are not exactly the same after training. Therefore, the stage-one feature image feature image extracted by using the first subnetwork and the stage-two feature image feature image extracted by using the second subnetwork are not exactly the same. It is needed to acquire the feature vector of the initial positioned point in the stage-two feature image according to the position of the initial positioned point in the input image and use the acquired feature vector as the data basis for determining the offset.

In step S404, graph convolution is performed on graph structure feature data composed of feature vectors of all initial positioned points to obtain the offsets of all the keypoints.

The graph convolution is performed so that information transfer is achieved between different keypoints, the features of all the keypoints are obtained through the inference with the assistance of adjacent keypoints and offsets of all the initial positioned points are determined.

In step S405, a position of the initial positioned point of each of the keypoints is added to each of the offsets corresponding to the respective keypoint, and a correction result is used as the target positioned point of each of the human keypoints in the input image..

In this embodiment of the present application, it is one correction manner that the position of the initial positioned point of each of the keypoints is added to each of the offsets corresponding to the respective keypoint. The manner in which the initial positioned points are corrected through the offsets is not limited in this embodiment of the present application.

In the scheme of this embodiment of the present application, the initial positioned point and the offset of each of the keypoints are determined by the two subnetworks in the positioning model. Since the offsets are determined according to the semantic relationship between features of adjacent keypoints of the initial positioned point, the problem of inaccurate recognition caused by that keypoints are obscured or blurred can be solved by correcting the initial positioned points through the offsets. When the positioning model is used for an intelligent device such as a surveillance camera, the device can obtain a more robust capability of human keypoint positioning.

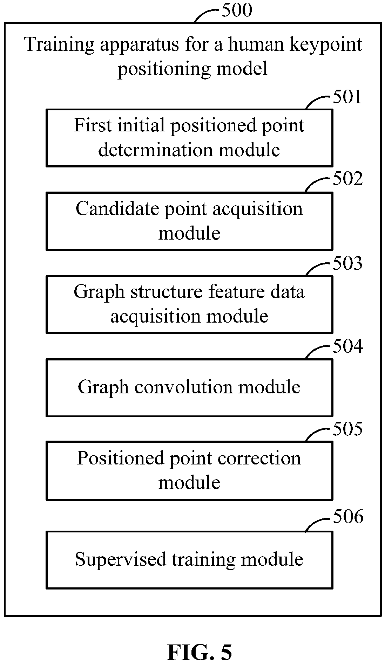

FIG. 5 is a diagram illustrating the structure of a training apparatus for a human keypoint positioning model according to an embodiment of the present application. This embodiment relates to the field of artificial intelligence and, in particular, to deep learning and computer vision technology. This embodiment is applicable to the case of human keypoint positioning. The apparatus can perform the training method for a human keypoint positioning model according to any embodiment of the present application. As shown in FIG. 5, the apparatus 500 includes a first initial positioned point determination module 501, a candidate point acquisition module 502, a graph structure feature data acquisition module 503, a graph convolution module 504, a positioned point correction module 505 and a supervised training module 506.

The first initial positioned point determination module 501 is configured to determine an initial positioned point of each of keypoints in a sample image by using a first subnetwork in a prebuilt positioning model.

The candidate point acquisition module 502 is configured to acquire N candidate points of each of the keypoints according to a position of the initial positioned point in the sample image, where N is a natural number.

The graph structure feature data acquisition module 503 is configured to extract a first feature image of the sample image by using a second subnetwork in the positioning model and form N sets of graph structure feature data according to the first feature image and the N candidate points of each of the keypoints, where each set of the N sets of graph structure feature data includes feature vectors each of which is a feature vector of one of the N candidate points of each of the keypoints in the first feature image.

The graph convolution module 504 is configured to perform graph convolution on the N sets of graph structure feature data respectively by using the second subnetwork to obtain N sets of offsets, where each set of offsets corresponds to all the keypoints.

The positioned point correction module 505 is configured to correct initial positioned points of all the keypoints by using the N sets of offsets to obtain N sets of current positioning results of all the keypoints.

The supervised training module 506 is configured to calculate each set of loss values according to labeled true values of all the keypoints and each set of the N sets of current positioning results separately, and perform supervised training on the positioning model according to each set of loss values.

Optionally, the first initial positioned point determination module 501 includes a second feature image extraction unit and a first initial positioned point determination unit.

The second feature image extraction unit is configured to perform feature extraction on the sample image by using the first subnetwork to obtain a second feature image.

The first initial positioned point determination unit is configured to generate a thermodynamic diagram of each of the keypoints according to the second feature image, and determine the initial positioned point of each of the keypoints according to a point response degree in the thermodynamic diagram of each of the keypoints.

Optionally, the candidate point acquisition module 502 includes a coordinate determination unit and a candidate point acquisition unit.

The coordinate determination unit is configured to determine coordinates of the initial positioned point of each of the keypoints according to the position of the initial positioned point in the sample image.

The candidate point acquisition unit is configured to acquire, for each of the keypoints, the N candidate points around the initial positioned point according to the coordinates of the initial positioned point.

Optionally, the graph convolution module 504 is configured to perform, according to an adjacency matrix indicating a structure relationship between human keypoints, the graph convolution on the N sets of graph structure feature data respectively by using the second subnetwork.

Optionally, the positioned point correction module 505 is configured to add each set of offsets to positions of the initial positioned points of all the keypoints separately to obtain the N sets of current positioning results of all the keypoints.

The training apparatus 500 for a human keypoint positioning model according to this embodiment of the present application can perform the training method for a human keypoint positioning model according to any embodiment of the present application and has function modules and beneficial effects corresponding to the performed method. For content not described in detail in this embodiment, see description in any method embodiment of the present application.

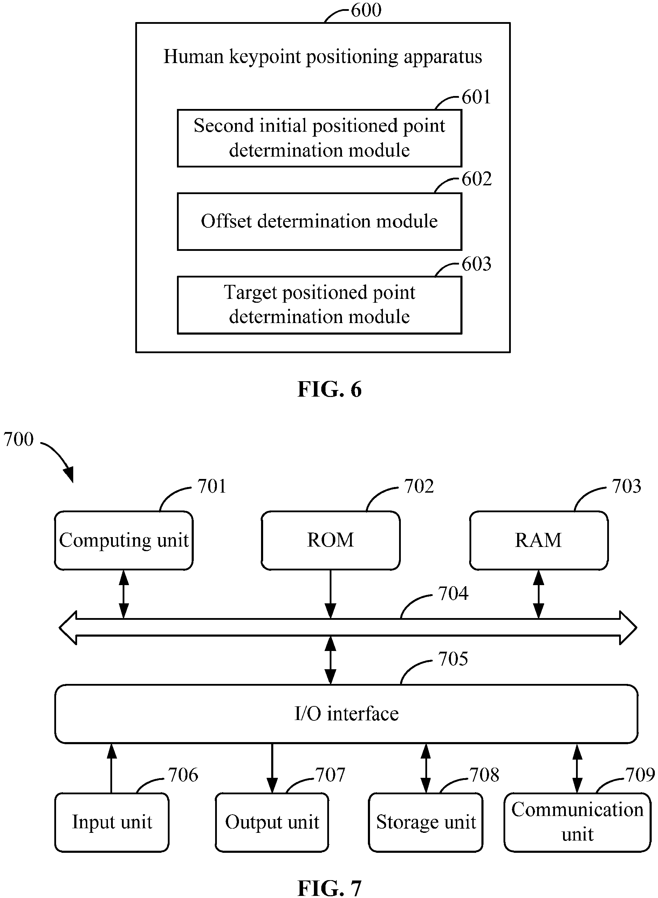

FIG. 6 is a diagram illustrating the structure of a human keypoint positioning apparatus according to an embodiment of the present application. This embodiment relates to the field of artificial intelligence and, in particular, to deep learning and computer vision technology. This embodiment is applicable to the case of human keypoint positioning. The apparatus can perform the human keypoint positioning method according to any embodiment of the present application. As shown in FIG. 6, the apparatus 600 includes a second initial positioned point determination module 601, an offset determination module 602 and a target positioned point determination module 603.

The second initial positioned point determination module 601 is configured to determine an initial positioned point of each of human keypoints in an input image by using a first subnetwork in a pretrained positioning model.

The offset determination module 602 is configured to determine, according to a semantic relationship between features of adjacent keypoints of the initial positioned point, offsets of all the keypoints by using a second subnetwork in the positioning model.

The target positioned point determination module 603 is configured to correct the initial positioned point of each of the keypoints by using each of the offsets corresponding to a respective keypoint, and use a correction result as a target positioned point of each of the human keypoints in the input image.

Optionally, the second initial positioned point determination module 601 includes a stage-one feature image extraction unit.

The stage-one feature image extraction unit is configured to extract a stage-one feature image of the input image by using the first subnetwork.

The second initial positioned point determination unit is configured to generate a thermodynamic diagram of each of the keypoints according to the stage-one feature image, and determine the initial positioned point of each of the keypoints according to a point response degree in the thermodynamic diagram of each of the keypoints.

Optionally, the offset determination module 602 includes a stage-two feature image extraction unit, a feature vector acquisition unit and an offset determination unit.

The stage-two feature image extraction unit is configured to extract a stage-two feature image of the input image by using the second subnetwork.

The feature vector acquisition unit is configured to acquire a feature vector of the initial positioned point in the stage-two feature image according to the position of the initial positioned point in the input image.

The offset determination unit is configured to perform graph convolution on graph structure feature data composed of feature vectors of all initial positioned points to obtain the offsets of all the keypoints.

Optionally, the target positioned point determination module 603 is configured to add a position of the initial positioned point of each of the keypoints to each of the offsets corresponding to the respective keypoint.

Optionally, the positioning model is obtained by being trained by using the training apparatus for a human keypoint positioning model according to any embodiment of the present application.

The human keypoint positioning apparatus 600 according to this embodiment of the present application can perform the human keypoint positioning method according to any embodiment of the present application and has function modules and beneficial effects corresponding to the performed method. For content not described in detail in this embodiment, see description in any method embodiment of the present application.

According to an embodiment of the present application, the present application further provides an electronic device, a readable storage medium and a computer program product.

FIG. 7 is a block diagram of an electronic device 700 for implementing the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 7, the device 700 includes a computing unit 701. The computing unit 701 can perform various appropriate actions and processing according to a computer program stored in a read-only memory (ROM) 702 or a computer program loaded into a random-access memory (RAM) 703 from a storage unit 708. The RAM 703 can also store various programs and data required for operations of the device 700. The calculation unit 701, the ROM 702 and the RAM 703 are connected to each other by a bus 704. An input/output (I/O) interface 705 is also connected to the bus 704.

Multiple components in the device 700 are connected to the I/O interface 705. The multiple components include an input unit 706 such as a keyboard or a mouse; an output unit 707 such as a display or a speaker; a storage unit 708 such as a magnetic disk or an optical disk; and a communication unit 709 such as a network card, a modem or a wireless communication transceiver. The communication unit 709 allows the device 700 to exchange information/data with other devices over a computer network such as the Internet and/or over various telecommunication networks.

The computing unit 701 may be a general-purpose and/or special-purpose processing component having processing and computing capabilities. Examples of the computing unit 701 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 701 performs various preceding methods and processing, for example, the training method for a human keypoint positioning model. For example, in some embodiments, the training method for a human keypoint positioning model may be implemented as a computer software program tangibly contained in a machine-readable medium, for example, the storage unit 708. In some embodiments, part or all of computer programs can be loaded and/or installed on the device 700 via the ROM 702 and/or the communication unit 709. When the computer program is loaded into the RAM 703 and executed by the computing unit 701, one or more steps of the training method for a human keypoint positioning model can be performed. Alternatively, in other embodiments, the computing unit 701 may be configured to perform the training method for a human keypoint positioning model in any other appropriate manner (for example, by use of firmware).

The preceding various implementations of systems and techniques may be implemented in digital electronic circuitry, integrated circuitry, a field-programmable gate array (FPGA), an application-specific integrated circuit (ASIC), an application-specific standard product (ASSP), a system on a chip (SoC), a complex programmable logic device (CPLD), computer hardware, firmware, software and/or any combination thereof. The various implementations may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium may include an electrical connection based on one or more wires, a portable computer disk, a hard disk, an RAM, an ROM, an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS) service. The server may also be a server of a distributed system or a server combined with a blockchain.

Moreover, according to an embodiment of the present application, the present application further provides another electronic device, another readable storage medium and another computer program product that are used for performing one or more steps of the human keypoint positioning method according to any embodiment of the present application. For the structures and program codes of this electronic device, see the description of the embodiment as shown in FIG. 7. The structures and program codes are not repeated here.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A training method for a human keypoint positioning model, comprising:
determining an initial positioned point of each of keypoints in a sample image by using a first subnetwork in a prebuilt positioning model;
acquiring N candidate points of each of the keypoints according to a position of the initial positioned point in the sample image, wherein N is a natural number;
extracting a first feature image of the sample image by using a second subnetwork in the positioning model, and forming N sets of graph structure feature data according to the first feature image and the N candidate points of each of the keypoints, wherein each set of the N sets of graph structure feature data comprises feature vectors each of which is a feature vector of one of the N candidate points of each of the keypoints in the first feature image;
performing graph convolution on the N sets of graph structure feature data respectively by using the second subnetwork to obtain N sets of offsets, wherein each set of offsets corresponds to all the keypoints;
correcting initial positioned points of all the keypoints by using the N sets of offsets to obtain N sets of current positioning results of all the keypoints; and
calculating each set of loss values according to labeled true values of all the keypoints and each set of the N sets of current positioning results separately, and performing supervised training on the positioning model according to each set of loss values.

2. The method of claim 1, wherein determining the initial positioned point of each of the keypoints in the sample image by using the first subnetwork in the prebuilt positioning model comprises:
performing feature extraction on the sample image by using the first subnetwork to obtain a second feature image; and
generating a thermodynamic diagram of each of the keypoints according to the second feature image, and determining the initial positioned point of each of the keypoints according to a point response degree in the thermodynamic diagram of each of the keypoints.

3. The method of claim 1, wherein acquiring the N candidate points of each of the keypoints according to the position of the initial positioned point in the sample image comprises:
determining coordinates of the initial positioned point of each of the keypoints according to the position of the initial positioned point in the sample image; and
acquiring, for each of the keypoints, the N candidate points around the initial positioned point according to the coordinates of the initial positioned point.

4. The method of claim 1, wherein performing the graph convolution on the N sets of graph structure feature data respectively by using the second subnetwork comprises:
performing, according to an adjacency matrix indicating a structure relationship between human keypoints, the graph convolution on the N sets of graph structure feature data respectively by using the second subnetwork.

5. The method of claim 1, wherein correcting the initial positioned points of all the keypoints by using the N sets of offsets to obtain the N sets of current positioning results of all the keypoints comprises:
adding each set of offsets to positions of the initial positioned points of all the keypoints separately to obtain the N sets of current positioning results of all the keypoints.

6. A human keypoint positioning method, comprising:
determining an initial positioned point of each of human keypoints in an input image by using a first subnetwork in a pretrained positioning model;
determining, according to a semantic relationship between features of adjacent keypoints of the initial positioned point, offsets of all the keypoints by using a second subnetwork in the positioning model; and
correcting the initial positioned point of each of the keypoints by using each of the offsets corresponding to a respective keypoint, and using a correction result as a target positioned point of each of the human keypoints in the input image.

7. The method of claim 6, wherein determining the initial positioned point of each of the human keypoints in the input image by using the first subnetwork in the pretrained positioning model comprises:
extracting a stage-one feature image of the input image by using the first subnetwork; and
generating a thermodynamic diagram of each of the keypoints according to the stage-one feature image, and determining the initial positioned point of each of the keypoints according to a point response degree in the thermodynamic diagram of each of the keypoints.

8. The method of claim 6, wherein determining, according to the semantic relationship between the features of the adjacent keypoints of the respective initial positioned point, the offsets of all the keypoints by using the second subnetwork in the positioning model comprises:
extracting a stage-two feature image of the input image by using the second subnetwork;
acquiring a feature vector of the initial positioned point in the stage-two feature image according to a position of the initial positioned point in the input image; and
performing graph convolution on graph structure feature data composed of feature vectors of all initial positioned points to obtain the offsets of all the keypoints.

9. The method of claim 6, wherein correcting the initial positioned point of each of the keypoints by using each of the offsets corresponding to the respective keypoint comprises:
adding a position of the initial positioned point of each of the keypoints to each of the offsets corresponding to the respective keypoint.

10. The method of any one of claims 6 to 9, wherein the positioning model is obtained by being trained according to the training method of any one of claims 1 to 5.

11. A training apparatus for a human keypoint positioning model, comprising:
a first initial positioned point determination module, which is configured to determine an initial positioned point of each of keypoints in a sample image by using a first subnetwork in a prebuilt positioning model;
a candidate point acquisition module, which is configured to acquire N candidate points of each of the keypoints according to a position of the initial positioned point in the sample image, wherein N is a natural number;
a graph structure feature data acquisition module, which is configured to extract a first feature image of the sample image by using a second subnetwork in the positioning model and form N sets of graph structure feature data according to the first feature image and the N candidate points of each of the keypoints, wherein each set of the N sets of graph structure feature data comprises feature vectors each of which is a feature vector of one of the N candidate points of each of the keypoints in the first feature image;
a graph convolution module, which is configured to perform graph convolution on the N sets of graph structure feature data respectively by using the second subnetwork to obtain N sets of offsets, wherein each set of offsets corresponds to all the keypoints;
a positioned point correction module, which is configured to correct initial positioned points of all the keypoints by using the N sets of offsets to obtain N sets of current positioning results of all the keypoints; and
a supervised training module, which is configured to calculate each set of loss values according to labeled true values of all the keypoints and each set of the N sets of current positioning results separately, and perform supervised training on the positioning model according to the each set of loss values.

12. A human keypoint positioning apparatus, comprising:
a second initial positioned point determination module, which is configured to determine an initial positioned point of each of human keypoints in an input image by using a first subnetwork in a pretrained positioning model;
an offset determination module, which is configured to determine, according to a semantic relationship between features of adjacent keypoints of the initial positioned point, offsets of all keypoints by using a second subnetwork in the positioning model; and
a target positioned point determination module, which is configured to correct the initial positioned point of each of the keypoints by using each of the offsets corresponding to a respective keypoint, and use a correction result as a target positioned point of each of the human keypoints in the input image.

13. An electronic device, comprising:
at least one processor; and
a memory communicatively connected to the at least one processor, wherein
the memory stores instructions executable by the at least one processor, wherein the instructions, when executed by the at least one processor, causes the at least one processor to perform the training method for a human keypoint positioning model according to any one of claims 1 to 5, or the human keypoint positioning method according to any one of claims 6 to 10.

14. Anon-transitory computer-readable storage medium storing computer instructions for causing a computer to perform the training method for a human keypoint positioning model according to any one of claims 1 to 5, or the human keypoint positioning method according to any one of claims 6 to 10.

15. A computer program product, comprising a computer program which, when executed by a processor, causes the processor to perform the training method for a human keypoint positioning model according to any one of claims 1 to 5, or the human keypoint positioning method according to any one of claims 6 to 10.
